# EUROPÄISCHE PATENTSCHRIFT

(11) **EP 3 280 026 B1**
(45) Veröffentlichungstag und Bekanntmachung des Hinweises auf die Patenterteilung: **27.01.2021**
(21) Anmeldenummer: 17178586.8
(22) Anmeldetag: 29.06.2017
(51) Int. Cl.: H02J 7/00, A47L 9/28

(54) **AKKU-BODENSTAUBSAUGER MIT LADEVORRICHTUNG**
BATTERY FLOOR VACUUM CLEANER WITH CHARGING DEVICE
ASPIRATEUR DE SOL À BATTERIE AVEC DISPOSITIF DE CHARGE

(30) Priorität: 03.08.2016 DE 102016114338
(43) Veröffentlichungstag der Anmeldung: 07.02.2018
(73) Patentinhaber: Miele & Cie. KG, 33332 Gütersloh (DE)
(72) Erfinder: CORDES, Alexander, 33615 Bielefeld (DE); POETTING, Michael, 33611 Bielefeld (DE)

(56) Entgegenhaltungen:
- WO-A1-2015/082019
- WO-A1-2016/114463
- CA-A1- 2 951 060
- US-A1- 2013 335 900
- US-A1- 2015 077 045

## Beschreibung

Der hier vorgestellte Ansatz betrifft eine Ladevorrichtung zum Aufladen einer elektrischen Energiespeichereinheit für ein Haushaltgerät, ein Haushaltgerät mit einer elektrischen Energiespeichereinheit und zumindest einer Kontakteinheit und ein Verfahren zum Aufladen eines Haushaltgeräts mit einer elektrischen Energiespeichereinheit.

Staubsauger mit einer Stromversorgung durch Akku-Technologie müssen regelmäßig geladen werden. Hierzu werden unterschiedliche Ladekonzepte angewandt. Es werden Geräte- oder Akku-Ladeschalen sowie externe oder interne Netzteile verwendet. Um den Ladevorgang zu starten, müssen deshalb in der Regel mehrere Handgriffe getätigt und ggf. schwer gehoben werden. Mögliche Vorgänge sind: Den Akku aus dem Gerät entnehmen, das Gerät in eine Ladestation heben, ein Netzteil an das Gerät anschließen, etc.

Die DE 198 57 685 A1 beschreibt einen Akkusauger mit Wandhalterung.

Die WO 2016/ 114463 A1 offenbart einen Roboter, welcher über eine Ladestation aufladbar ist. Der Roboter kann die Ladestation dabei über eine Rampe autonom befahren und einen Ladevorgang seiner Energiespeichereinrichtung initiieren. Die Ladeeinheit der Ladestation ist dabei auf der für den Roboter befahrbaren Fläche angeordnet.

Die US 2013 / 0335900 A1 offenbart einen Saugroboter, welcher über eine Ladestation aufladbar ist. Der Roboter kann die Ladestation dabei über eine Rampe autonom befahren und einen Ladevorgang seiner Energiespeichereinrichtung initiieren. Die Ladeeinheit der Ladestation ist dabei auf der für den Roboter befahrbaren Fläche angeordnet.

Die WO 2015/082019 A1 offenbart ebenfalls einen Saugroboter, welcher über eine Ladestation aufladbar ist. Der Roboter kann die Ladestation dabei über eine Rampe autonom befahren und einen Ladevorgang seiner Energiespeichereinrichtung initiieren. Die Ladeeinheit der Ladestation ist dabei an einer Stirnfläche der Ladestation angeordnet.

Die CA 2 951 060 A1 offenbart eine Ladestation für einen Roboter, wobei die Ladestation für den Roboter autonom befahrbar ist.

Die US 9 376 027 B2 offenbart eine Ladestation für einen Mähroboter, wobei die Ladestation für den Mähroboter autonom befahrbar ist.

Dem hier vorgestellten Ansatz liegt die Aufgabe zugrunde, eine verbesserte Ladevorrichtung zum Aufladen einer elektrischen Energiespeichereinheit für ein Haushaltgerät, ein verbessertes Haushaltgerät mit einer elektrischen Energiespeichereinheit und zumindest einer Kontakteinheit und ein verbessertes Verfahren zum Aufladen eines Haushaltgeräts mit einer elektrischen Energiespeichereinheit zu schaffen.

Erfindungsgemäß wird diese Aufgabe durch den Akku Bodenstaubsauger gemäß Anspruch 1 gelöst. Vorteilhafte Ausgestaltungen und Weiterbildungen des Ansatzes ergeben sich aus den nachfolgenden Unteransprüchen.

Die mit dem hier vorgestellten Ansatz erreichbaren Vorteile bestehen darin, dass ein Haushaltgerät wie ein möglicherweise schwerer und/oder unhandlicher Staubsauger zum Aufladen einer elektrischen Energiespeichereinheit des Staubsaugers nicht angehoben werden muss.

Eine Ladevorrichtung zum Aufladen einer elektrischen Energiespeichereinheit für ein Haushaltgerät umfasst zumindest eine Aufstelleinrichtung zum Aufstellen des Haushaltgeräts. Weiterhin umfasst die Ladevorrichtung eine Auffahrrampe zum Auffahren des Haushaltgeräts auf die Aufstelleinrichtung. Letztendlich umfasst die Ladevorrichtung zumindest eine Ladeeinheit, die dazu ausgeformt ist, um das Haushaltgerät im aufgestellten Zustand des Haushaltgeräts auf der Aufstelleinrichtung zu kontaktieren, um die Energiespeichereinheit aufzuladen. Bei dem Haushaltgerät kann es sich beispielsweise um einen Staubsauger handeln. Durch die vorgestellte Ladevorrichtung ist vorteilhafterweise weder ein Entnehmen der Energiespeichereinheit aus dem Haushaltgerät noch ein Anheben des Haushaltgeräts zum Aufladen der Energiespeichereinheit nötig. Da das Haushaltgerät einfach über die Auffahrrampe auf die Aufstelleinrichtung gezogen werden kann, vereinfacht und verkürzt dies den Ladevorgang gegenüber bekannten Ladevorgängen.

Unter einer Aufstelleinrichtung kann hierbei eine Einheit verstanden werden, auf die das Haushaltgerät gestellt (d. h. aufgestellt) wird.

Um von allen Seiten gleichermaßen erreichbar zu sein, kann die Ladeeinheit im Bereich einer Mitte der Aufstelleinrichtung angeordnet sein. Wenn die Aufstelleinrichtung im Wesentlichen rund ausgeformt ist, kann ein Auffahren des Haushaltgeräts über die Auffahrrampe von allen Seiten aus besonders einfach vonstattengehen. Um das Haushaltgerät weiterhin von allen Seiten auf die Aufstelleinrichtung auffahrbar zu machen, ist es von Vorteil, wenn die Auffahrrampe umlaufend um einen Rand der Aufstelleinrichtung angeordnet ist.

Gemäß einer Ausführungsform kann die Ladeeinheit federbar mit der Aufstelleinrichtung gekoppelt oder koppelbar sein, um die Ladeeinheit abhängig von einer Höhe eines auf der Aufstelleinrichtung angeordneten Haushaltgeräts zum Kontaktieren mit dem Haushaltgerät höhenverstellbar zu machen. So kann die Ladeeinheit beispielsweise zwischen dem Haushaltgerät und der Aufstelleinrichtung flexibel verstellbar oder anpassbar sein.

Wenn die Aufstelleinrichtung zumindest eine Vertiefung aufweist, die dazu ausgeformt ist, um im aufgestellten Zustand des Haushaltgeräts auf der Aufstelleinrichtung zumindest eine Rolle des Haushaltgeräts zumindest teilweise aufzunehmen, kann eine Aufstellposition oder Aufstellstellung für das Haushaltgerät vorherbestimmbar sein. Die Vertiefung kann vorteilhafterweise kreisförmig um die Ladeeinheit herum verlaufend ausgeformt sein, um eine Fahrrinne für das Haushaltgerät auszuformen, die von allen Seiten nach dem Auffahren des Haushaltgeräts auf die Ladevorrichtung gleichermaßen erreichbar ist. Die Vertiefung kann jedoch auch nur teilweise kreisförmig um die Ladeeinheit herum verlaufend ausgeformt sein.

Die Ladevorrichtung kann gemäß einer Ausführungsform im Bereich eines Rands der Ladevorrichtung zumindest eine weitere Ladeeinheit aufweisen, die dazu ausgebildet sein kann, um eine Bodendüse des Haushaltgeräts zu kontaktieren, um eine Bodendüsenenergiespeichereinheit der Bodendüse aufzuladen. Hierfür kann beispielsweise ein Abschnitt der Auffahrrampe dazu ausgebildet sein, um bei Kontakt mit der Bodendüse deren Bodendüsenenergiespeichereinheit aufzuladen. Die weitere Ladeeinheit kann aber auch dazu ausgeformt sein, um die Bodendüse zumindest teilweise aufzunehmen, um eine eigene Aufnahmeeinrichtung speziell für die Bodendüse zu schaffen, in der deren Bodendüsenenergiespeichereinheit aufgeladen werden kann.

Eine Oberfläche der Aufstelleinrichtung kann zumindest teilweise drehbar ausgeformt sein, um das Haushaltgerät auf der Ladevorrichtung drehbar zu machen. Dies erleichtert eine Handhabung des Haushaltgeräts auf der Ladevorrichtung. So kann das Haushaltgerät beispielsweise auf die Ladevorrichtung gezogen werden, nach dem Laden beispielsweise um 180°gedreht werden, und dann entgegen der Aufziehrichtung einfach wieder von der Ladevorrichtung heruntergezogen werden.

Ein Haushaltgerät weist eine elektrische Energiespeichereinheit und zumindest eine Kontakteinheit auf, die dazu ausgebildet ist, um in einem auf einer der vorgestellten Ladevorrichtungen aufgestellten Zustand des Haushaltgeräts die Ladeeinheit der Ladevorrichtung zu kontaktieren, um die elektrische Energiespeichereinheit des Haushaltgeräts aufzuladen. Ein hier vorgestelltes Haushaltgerät kann als Ersatz für bekannte Haushaltgeräte dienen, wobei die Energiespeichereinheit des vorgestellten Haushaltgeräts vorteilhafterweise einfach und ohne ein Anheben des Haushaltgeräts, lediglich durch ein Aufziehen des Haushaltgeräts auf die Ladevorrichtung, aufgeladen werden kann.

Ausführungsbeispiele des Ansatzes sind in den Zeichnungen rein schematisch dargestellt und werden nachfolgend näher beschrieben. Es zeigt
- Figur 1: eine schematische Seitenansicht eines Staubsaugers auf einer Ladevorrichtung gemäß einem Ausführungsbeispiel;
- Figur 2: einen Querschnitt einer Ladevorrichtung gemäß einem Ausführungsbeispiel;
- Figur 3: einen Querschnitt einer Ladevorrichtung gemäß einem Ausführungsbeispiel;
- Figur 4: eine perspektivische Aufsicht auf eine Ladevorrichtung gemäß einem Ausführungsbeispiel;
- Figur 5: eine schematische Seitenansicht eines Staubsaugers auf einer Ladevorrichtung gemäß einem Ausführungsbeispiel; und
- Figur 6: ein Ablaufdiagramm eines Verfahrens zum Aufladen eines Staubsaugers mit einer elektrischen Energiespeichereinheit gemäß einem Ausführungsbeispiel.

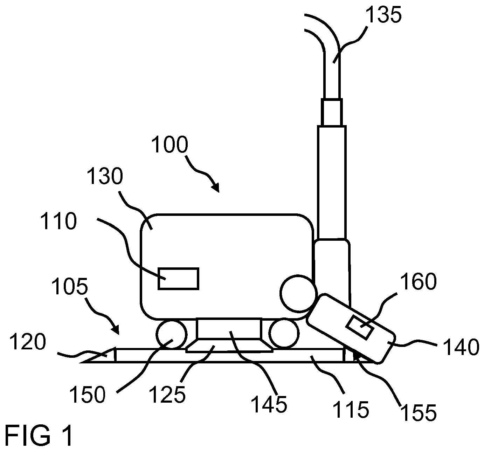

Figur 1 zeigt eine schematische Seitenansicht eines Staubsaugers 100 auf einer Ladevorrichtung 105 gemäß einem Ausführungsbeispiel. Gemäß einem alternativen Ausführungsbeispiel kann es sich hierbei anstelle des Staubsaugers 100 auch um ein anderes Haushaltgerät handeln.

Die Ladevorrichtung 105 ist dazu ausgebildet, um eine elektrische Energiespeichereinheit 110 des Staubsaugers 100 aufzuladen, wenn der Staubsauger 100 wie dargestellt auf der Ladevorrichtung 105 angeordnet ist.

Hierzu weist die Ladevorrichtung 105 zumindest eine Aufstelleinrichtung 115 auf, die dazu ausgeformt ist, um den Staubsauger 100 aufzustellen. Weiterhin weist die Ladevorrichtung 100 eine Auffahrrampe 120 auf, die dazu ausgeformt ist, um den Staubsauger 100 auf die Aufstelleinrichtung 115 aufzufahren. Gemäß diesem Ausführungsbeispiel ist die Auffahrrampe 120 umlaufend um einen Rand der Aufstelleinrichtung 115 angeordnet. Die Ladevorrichtung 105 umfasst weiterhin eine Ladeeinheit 125, die dazu ausgeformt ist, um den Staubsauger 100 im aufgestellten Zustand des Staubsaugers 100 auf der Aufstelleinrichtung 115 zu kontaktieren, um die Energiespeichereinheit 110 aufzuladen. Gemäß diesem Ausführungsbeispiel ist die Ladeeinheit 125 in einer Mitte der Aufstelleinrichtung 115 angeordnet.

Der Staubsauger 100 weist gemäß diesem Ausführungsbeispiel einen Staubsaugerkörper 130 mit der Energiespeichereinheit 110, einen Staubsaugerschlauch 135, eine Bodendüse 140, eine Kontakteinheit 145 und eine Mehrzahl an Rollen 150 auf. Die Kontakteinheit 145 des Staubsaugers 100 kontaktiert gemäß diesem Ausführungsbeispiel die Ladeeinheit 125 der Ladevorrichtung 105, wodurch die elektrische Energiespeichereinheit 110 des Staubsaugers aufgeladen wird. Hierzu kann die Kontakteinheit 145 federbar an dem Staubsauger 100 angeordnet sein.

Gemäß diesem Ausführungsbeispiel weist die Ladevorrichtung 105 optional im Bereich eines Rands der Ladevorrichtung 105, hier an einem Abschnitt der Auffahrrampe 120, eine weitere Ladeeinheit 155 auf. Die weitere Ladeeinheit 155 ist dazu ausgebildet, um bei Kontakt mit der Bodendüse 140 eine Bodendüsenenergiespeichereinheit 160 der Bodendüse 140 aufzuladen.

Im Folgenden werden Ausführungsbeispiele anhand der Figur 1 nochmals näher beschrieben:
Die vorgestellte Ladevorrichtung 105 kann auch als eine Lade-Insel, Ladestation oder ein Ladeteller für einen Akku-Bodenstaubsauger bezeichnet werden. Es ergibt sich durch die Ladevorrichtung 105 der Vorteil, dass ein Ladestecker vor- und nach jedem Ladevorgang nicht gehandhabt werden muss. Weiterhin ist es nicht nötig, das gesamte Gerät, also den Staubsauger 100, vor- und nach jedem Ladevorgang anzuheben und abzustellen. Das Fügen des Staubsaugers 100 mit der Ladevorrichtung 105 kann dabei in einer definierten Position erfolgen, wobei die koaxial angeordneten Ladekontakte eine Vielzahl von Positionen bezüglich der Drehung des Staubsaugers 100 auf dem Ladeteller 105 zulassen. Die Handhabung von Staubsauger 100 und Ladevorrichtung 100 wird vereinfacht. Das Anheben des Staubsaugers 100 ist nicht notwendig, da der Staubsauger 100 aus jedem beliebigen Winkel auf die Ladevorrichtung 105 herauf- und von der Ladevorrichtung 105 heruntergezogen werden kann.

Das Aufladen der Bodendüse 140 erfolgt beim Abstellen des Staubsaugers 100 auf die Ladevorrichtung 105 durch Kontakt zwischen der Bodendüse 140 und der Ladevorrichtung 105, das Aufladen des Staubsaugers 100 erfolgt durch Kontakt des Staubsaugers 100 mit der Ladevorrichtung 105.

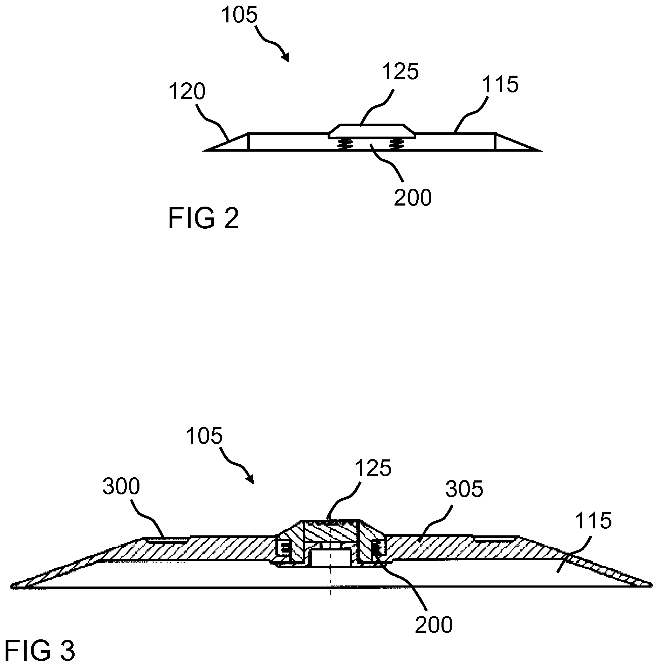

Figur 2 zeigt einen Querschnitt einer Ladevorrichtung 105 gemäß einem Ausführungsbeispiel. Dabei kann es sich um die anhand von Figur 1 beschriebene Ladevorrichtung 105 handeln.

Gemäß diesem Ausführungsbeispiel ist die Ladeeinheit 125 federbar mit der Aufstelleinrichtung 115 gekoppelt. Hierzu weist die Ladevorrichtung 105 zwischen der Ladeeinheit 125 und der Aufstelleinrichtung 115 einen federnden Schaum 200 auf. Gemäß einem alternativen Ausführungsbeispiel kann die Ladevorrichtung 105 anstelle des Schaums 200 auch ein anderes federndes Medium aufweisen.

Fig. 3 zeigt einen Querschnitt einer Ladevorrichtung 105 gemäß einem Ausführungsbeispiel. Dabei kann es sich um eine der anhand der vorangegangenen Figuren beschriebenen Ladevorrichtungen 105 handeln.

Gemäß diesem Ausführungsbeispiel weist die Aufstelleinrichtung 115 eine Vertiefung 300 auf, die dazu ausgeformt ist, um im aufgestellten Zustand des Staubsaugers auf der Aufstelleinrichtung 115 zumindest eine der Rollen des Staubsaugers zumindest teilweise aufzunehmen. Gemäß diesem Ausführungsbeispiel ist die Vertiefung 300 kreisförmig um die Ladeeinheit 125 herum verlaufend ausgeformt. Eine Oberfläche 305 der Aufstelleinrichtung 115 ist gemäß diesem Ausführungsbeispiel drehbar ausgeformt.

Wenn der Staubsauger auf der Ladevorrichtung 105 angeordnet ist, können die Ladevorrichtung 105 und der Staubsauger zueinander verdreht werden. Die Ladevorrichtung 105 hat gemäß diesem Ausführungsbeispiel die Form eines kreisrunden Tellers. In der Mitte der Ladevorrichtung 105 befindet sich ein koaxialer Ladekontakt in Form der Ladeeinheit 125. Der Staubsauger kann aus jedem Winkel in die kreisrunde Fahrrinne in Form der Vertiefung 300 der Ladevorrichtung 105 gezogen werden.

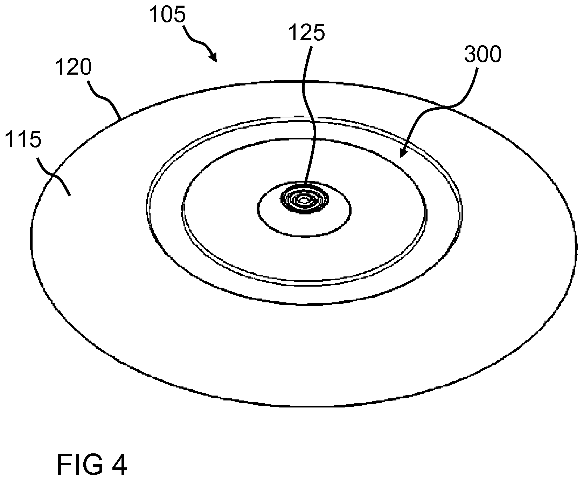

Fig. 4 zeigt eine perspektivische Aufsicht auf eine Ladevorrichtung 105 gemäß einem Ausführungsbeispiel. Dabei kann es sich um eine der anhand der vorangegangenen Figuren beschriebenen Ladevorrichtungen 105 handeln.

Zu erkennen ist hier, dass die Aufstelleinrichtung 115 gemäß diesem Ausführungsbeispiel rund ausgeformt ist. Die Ladevorrichtung 105 in Tellerform, die auch als Freestyle-Ladeteller bezeichnet werden kann, weist die umlaufende Auffahrrampe 120 auf, sodass der Staubsauger aus jedem Winkel auf die und von der Ladevorrichtung 100 gezogen werden kann. Die umlaufende ebene Vertiefung 300 dient als Fahrrinne für die Rollen des Staubsaugers. Der Staubsauger kann gemäß diesem Ausführungsbeispiel in der Fahrrinne gedreht werden. Ein Einfedern der koaxialen Ladeeinheit 125 beim Herauf- und Herunterfahren des Staubsaugers wird durch schiefe Ebenen realisiert.

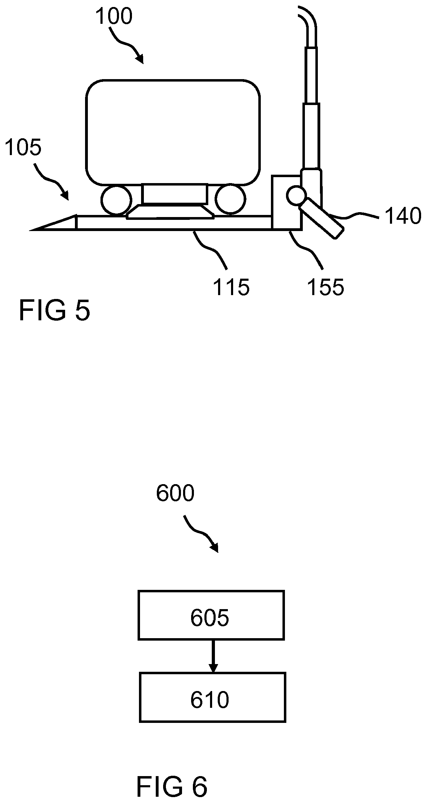

Fig. 5 zeigt eine schematische Seitenansicht eines Staubsaugers 100 auf einer Ladevorrichtung 105 gemäß einem Ausführungsbeispiel. Dabei kann es sich um eine der anhand der vorangegangenen Figuren beschriebenen Ladevorrichtungen 105 mit dem in Fig. 1 beschriebenen Staubsauger 100 handeln.

Gemäß diesem Ausführungsbeispiel ist die weitere Ladeeinheit 155 dazu ausgebildet, um die Bodendüse 140, die auch als Akku-Elektrodüse bezeichnet werden kann, teilweise aufzunehmen. Zum Aufladen der Bodendüsenenergiespeichereinheit der Bodendüse 140 ist die Bodendüse 140 in einer Parking-Position in die weitere Ladeeinheit 155 eingehängt.

Fig. 6 zeigt ein Ablaufdiagramm eines Verfahrens 600 zum Aufladen eines Haushaltgeräts mit einer elektrischen Energiespeichereinheit gemäß einem Ausführungsbeispiel. Dabei kann es sich um ein Verfahren 600 handeln, das von einer der anhand der vorangegangenen Figuren beschriebenen Ladevorrichtungen ausführbar ist. Das Haushaltgerät kann der anhand der Figuren 1 oder 5 vorgestellte Staubsauger sein.

In einem Schritt 605 des Bereitstellens wird die Ladevorrichtung bereitgestellt. In einem Schritt 610 des Aufstellens wird das Haushaltgerät auf die Aufstelleinrichtung der Ladevorrichtung aufgestellt zum Kontaktieren des Haushaltgeräts mit der Ladeeinheit, um die Energiespeichereinheit des Haushaltgeräts aufzuladen.

## Patentansprüche

1. Akku-Bodenstaubsauger (100) mit einer Ladeeinrichtung (105) und mit einer elektrischen Energiespeichereinheit (110) und zumindest einer Kontakteinheit (145), die dazu ausgebildet ist, um in einem auf einer Ladevorrichtung (105) aufgestellten Zustand des Staubsaugers (100) eine Ladeeinheit (125) der Ladevorrichtung (105) zu kontaktieren, um die elektrische Energiespeichereinheit (110) des Staubsaugers (100) aufzuladen, wobei die Ladevorrichtung (105) zumindest die folgenden Merkmale aufweist: eine Aufstelleinrichtung (115) zum Aufstellen des Staubsaugers (100); eine Auffahrrampe (120) zum Auffahren des Staubsaugers (100) auf die Aufstelleinrichtung (115), wobei die Auffahrrampe (120) umlaufend um einen Rand der Aufstelleinrichtung angeordnet (115) ist; und zumindest eine Ladeeinheit (125) zum Aufladen der Energiespeichereinheit (110) des Staubsaugers (100), wobei die Ladeeinheit (125) dazu ausgeformt ist, um den Staubsauger (100) im aufgestellten Zustand des Staubsaugers (100) auf der Aufstelleinrichtung (115) zu kontaktieren, um die Energiespeichereinheit (110) aufzuladen; wobei die Ladeeinheit (125) im Bereich der Mitte der Aufstelleinrichtung (115) angeordnet ist, die Aufstelleinrichtung (115) zumindest eine Vertiefung (300) aufweist, die dazu ausgeformt ist, um im aufgestellten Zustand des Staubsaugers (100) auf der Aufstelleinrichtung (115) zumindest eine Rolle des Staubsaugers (100) zumindest teilweise aufzunehmen,
wobei
die Vertiefung (300) zumindest teilweise kreisförmig um die Ladeeinheit (125) herum verlaufend ausgeformt ist.

2. Akku-Bodenstaubsauger (100) mit einer Ladevorrichtung (105) gemäß Anspruch 1, bei der die Aufstelleinrichtung (115) im Wesentlichen rund ausgeformt ist.

3. Akku-Bodenstaubsauger (100) mit einer Ladevorrichtung (105) gemäß einem der vorangegangenen Ansprüche, bei der die Ladeeinheit (125) federbar mit der Aufstelleinrichtung (115) gekoppelt oder koppelbar ist.

4. Akku-Bodenstaubsauger (100) mit einer Ladevorrichtung (105) gemäß einem der vorangegangenen Ansprüche, bei der die Ladevorrichtung (105) im Bereich eines Rands der Ladevorrichtung (105) zumindest eine weitere Ladeeinheit (155) aufweist, die dazu ausgebildet ist, um eine Bodendüse (140) des Staubsaugers (100) zu kontaktieren, um eine Bodendüsenenergiespeichereinheit (160) der Bodendüse (140) aufzuladen.

5. Akku-Bodenstaubsauger (100) mit einer Ladevorrichtung (105) gemäß einem der vorangegangenen Ansprüche, bei der eine Oberfläche (305) der Aufstelleinrichtung (115) zumindest teilweise drehbar ausgeformt ist.

## Claims

1. Cordless vacuum cleaner (100) having a charging device (105) and having an electrical energy storage unit (110) and at least one contact unit (145), which contact unit is designed, when the vacuum cleaner (100) is installed on a charging device (105), to contact a charging unit (125) of the charging device (105) in order to charge the electrical energy storage unit (110) of the vacuum cleaner (100), wherein the charging device (105) has at least the following features:
an installation device (115) for installing the vacuum cleaner (100);
a drive-on ramp (120) for driving the vacuum cleaner (100) onto the installation device (115), wherein the drive-on ramp (120) is arranged peripherally around an edge of the installation device (115); and
at least one charging unit (125) for charging the energy storage unit (110) of the vacuum cleaner (100), wherein the charging unit (125) is designed, when the vacuum cleaner (100) is installed on the installation device (115), to contact the vacuum cleaner (100) in order to charge the energy storage unit (110);
wherein the charging unit (125) is arranged in the region of the centre of the installation device (115), the installation device (115) has at least one recess (300) which is designed to at least partially receive at least one roller of the vacuum cleaner (100) when the vacuum cleaner (100) is installed on the installation device (115), wherein the recess (300) is at least partially circular in order to extend around the charging unit (125).

2. Cordless vacuum cleaner (100) having a charging device (105) according to claim 1, wherein the installation device (115) is substantially round.

3. Cordless vacuum cleaner (100) having a charging device (105) according to either of the preceding claims, wherein the charging unit (125) is or can be spring-coupled to the installation device (115).

4. Cordless vacuum cleaner (100) having a charging device (105) according to any of the preceding claims, wherein the charging device (105) has at least one further charging unit (155) in the region of an edge of the charging device (105), which charging unit is designed to contact a floor nozzle (140) of the vacuum cleaner (100) in order to charge a floor nozzle energy storage unit (160) of the floor nozzle (140).

5. Cordless vacuum cleaner (100) having a charging device (105) according to any of the preceding claims, wherein a surface (305) of the installation device (115) is at least partially rotatable.

## Revendications

1. Aspirateur-traîneau à batterie (100) comportant un chargeur (105), une unité de stockage d'énergie électrique (110) et au moins une unité de contact (145) qui est conçue, lorsque l'aspirateur (100) est positionné sur un chargeur (105), pour la mise en contact avec une unité de charge (125) du chargeur (105) afin de charger l'unité de stockage d'énergie électrique (110) de l'aspirateur (100), le chargeur (105) présentant au moins les caractéristiques suivantes :
un dispositif de positionnement (115) servant au positionnement de l'aspirateur (100) ; une rampe d'accès (120) servant à l'accès de l'aspirateur (100) sur le dispositif de positionnement (115), la rampe d'accès (120) étant disposée de façon périphérique autour d'un bord du dispositif de positionnement (115) ; et
au moins une unité de charge (125) servant à la charge de l'unité de stockage d'énergie (110) de l'aspirateur (100), l'unité de charge (125) étant réalisée pour la mise en contact avec l'aspirateur (100) lorsque l'aspirateur (100) est positionné sur le dispositif de positionnement (115) afin de charger l'unité de stockage d'énergie (110) ;
l'unité de charge (125) étant disposée dans la zone centrale du dispositif de positionnement (115), le dispositif de positionnement (115) présentant au moins une cavité (300) qui est réalisée pour recevoir au moins partiellement, lorsque l'aspirateur (100) est positionné sur le dispositif de positionnement (115), au moins un rouleau de l'aspirateur (100),
la cavité (300) étant réalisée de façon au moins partiellement circulaire autour de l'unité de charge (125).

2. Aspirateur-traîneau à batterie (100) comportant un chargeur (105) selon la revendication 1, le dispositif de positionnement (115) étant sensiblement rond.

3. Aspirateur-traîneau à batterie (100) comportant un chargeur (105) selon l'une des revendications précédentes, l'unité de charge (125) étant accouplée ou pouvant être accouplée par ressort au dispositif de positionnement (115).

4. Aspirateur-traîneau à batterie (100) comportant un chargeur (105) selon l'une des revendications précédentes, le chargeur (105) présentant au moins une autre unité de charge (155) dans la zone d'un bord du chargeur (105), laquelle autre unité de charge est conçue pour la mise en contact avec une buse de sol (140) de l'aspirateur (100) afin de charger une unité de stockage d'énergie de buse de sol (160) de la buse de sol (140).

5. Aspirateur-traîneau à batterie (100) comportant un chargeur (105) selon l'une des revendications précédentes, une surface (305) du dispositif de positionnement (115) étant au moins partiellement rotative.
